# EUROPEAN PATENT APPLICATION

(11) **EP 4 181 530 A1**
(43) Date of publication of application: **17.05.2023**
(21) Application number: 21850433.0
(22) Date of filing: 23.07.2021
(51) Int. Cl.: H04R 1/10

(54) **METHOD AND APPARATUS FOR REALIZING LOW POWER CONSUMPTION OF WIRELESS HEADSET, AND WIRELESS HEADSET AND READABLE STORAGE MEDIUM**

(30) Priority: 31.07.2020 CN 202010769967
(71) Applicant: Huawei Technologies Co., Ltd., Shenzhen, Guangdong 518129 (CN)
(72) Inventor: HUANG, Shuanghuan, Shenzhen, Guangdong 518129 (CN)
(74) Representative: Grünecker Patent- und Rechtsanwälte PartG mbB
(86) International application number: PCT/CN2021/108200
(87) International publication number: WO 2022/022423

(57) **Abstract**

This application is applicable to the terminal field, and provides a low power consumption method and apparatus for a wireless headset, a wireless headset, and a readable storage medium. The method includes: when a call is performed by using the wireless headset, detecting whether a mute operation is received; and if the mute operation is detected, in response to the mute operation, switching the wireless headset to a low power consumption mode and performing at least one of the following low power consumption operations: reducing an audio collection frequency of at least one microphone in the wireless headset, turning off at least one microphone in the wireless headset, and disabling at least one uplink data processing algorithm in the wireless headset. Detection is performed on the mute operation during a call. If the mute operation is detected, a low power consumption policy is executed to reduce power consumption of the wireless headset during the call, so that a service life of the wireless headset is prolonged.

## Description

This application claims priority to Chinese Patent Application No. 202010769967.1, filed with the China National Intellectual Property Administration on July 31, 2020 and entitled "LOW POWER CONSUMPTION METHOD AND APPARATUS FOR WIRELESS HEADSET, WIRELESS HEADSET, AND READABLE STORAGE MEDIUM", which is incorporated herein by reference in its entirety.

### TECHNICAL FIELD

This application relates to the terminal field, and in particular, to a low power consumption method and apparatus for a wireless headset, a wireless headset, and a readable storage medium.

### BACKGROUND

An operation of connecting a wireless headset to a terminal device and then performing a call by using the wireless headset is one of common operations by a user today. The wireless headset is powered by a battery. Therefore, how to reduce power consumption of the wireless headset and prolong a service life of the wireless headset is always a research direction of a wireless headset manufacturer.

In the conventional technology, a low energy Bluetooth module and a common Bluetooth module are combined. When a user interacts with a terminal device by using a voice command, only the low energy Bluetooth module is enabled; and when the user needs to answer a call or make a call to perform a voice call, the common Bluetooth module is enabled. Differences in function features and power consumption of the low energy Bluetooth module and the common Bluetooth module are used to reduce power consumption of a wireless headset and prolong standby and operating time.

However, in the conventional technology, there is no effective low power consumption manner to reduce power consumption of the wireless headset during a call.

### SUMMARY

Embodiments of this application provide a low power consumption method and apparatus for a wireless headset, a wireless headset, and a readable storage medium, to alleviate a problem that power consumption of the wireless headset during a call cannot be reduced.

According to a first aspect, an embodiment of this application provides a low power consumption method for a wireless headset. The wireless headset is communicatively connected to a terminal device, and the method includes:
when a call is performed by using the wireless headset, detecting whether a mute operation is received; and if the mute operation is detected, in response to the mute operation, switching the wireless headset to a low power consumption mode and performing at least one of the following low power consumption operations: reducing an audio collection frequency of at least one microphone in the wireless headset, turning off at least one microphone in the wireless headset, and disabling at least one uplink data processing algorithm in the wireless headset.

The mute operation may include a mute operation performed on a microphone, a mute operation performed on an application, or a mute operation performed on the entire terminal device.

For example, the wireless headset may usually be a Bluetooth headset such as a head-mounted Bluetooth headset, a neckband Bluetooth headset, an in-ear Bluetooth headset, or an ear-hook Bluetooth headset, or may be a true wireless stereo (True Wireless Stereo, TWS) headset. The terminal device may include a terminal device, for example, a smartphone, a tablet computer, a desktop computer, or a laptop computer, that can perform a call by using a wireless headset.

It should be understood that performing a call by using the wireless headset may be making a call by using the wireless headset, or may be performing a voice call in an application by using the wireless headset, or may be a voice call part when a video call is performed by using the terminal device. A type of the call is not limited herein.

In the first aspect, when a call is performed by using the wireless headset, if the mute operation is detected, low power consumption processing is performed on the wireless headset in response to the mute operation. The low power consumption processing includes at least one of the following operations: reducing an audio collection frequency of at least one microphone in the wireless headset, turning off at least one microphone in the wireless headset, and disabling at least one uplink data processing algorithm in the wireless headset. Detection is performed on the mute operation during a call. If the mute operation is detected, a low power consumption policy is executed to reduce power consumption of the wireless headset during the call, so that a service life of the wireless headset is prolonged.

In some implementations, the wireless headset includes a touch area.

That the mute operation is detected includes: the mute operation performed by a user on the touch area is detected.

In some implementations, after the mute operation performed by the user on the touch area is detected, the method further includes: sending a mute instruction to the terminal device based on the mute operation.

In some implementations, that the mute operation is detected includes: that a mute instruction sent by the terminal device based on the mute operation on the terminal device is received is detected.

In some implementations, after the disabling at least one uplink data processing algorithm in the wireless headset is performed on the wireless headset, the method further includes: reducing a frequency of a digital signal processing module in the wireless headset.

In some implementations, after the reducing a frequency of a digital signal processing module in the wireless headset, the method further includes: disabling a path that is in an audio codec of the wireless headset and that is used to process data collected by a microphone.

In some implementations, after the switching the wireless headset to a low power consumption mode, the method further includes: detecting whether an unmute operation is received; and if the unmute operation is detected, disabling the low power consumption mode of the wireless headset in response to the unmute operation.

According to a second aspect, an embodiment of this application provides a low power consumption apparatus for a wireless headset. The wireless headset is communicatively connected to a terminal device, and the apparatus includes:
a detection module, configured to: when a call is performed by using the wireless headset, detect whether a mute operation is received; and
a response module, configured to: if the mute operation is detected, in response to the mute operation, switch the wireless headset to a low power consumption mode and perform at least one of the following low power consumption operations: reducing an audio collection frequency of at least one microphone in the wireless headset, turning off at least one microphone in the wireless headset, and disabling at least one uplink data processing algorithm in the wireless headset.

In some implementations, the wireless headset includes a touch area.

The detection module is specifically configured to detect the mute operation performed by a user on the touch area.

In some implementations, the apparatus further includes a sending module, configured to send a mute instruction to the terminal device based on the mute operation.

In some implementations, the detection module is specifically configured to detect that a mute instruction sent by the terminal device based on the mute operation on the terminal device is received.

In some implementations, the response module is further configured to reduce a frequency of a digital signal processing module in the wireless headset.

In some implementations, the response module is further configured to disable a path that is in an audio codec of the wireless headset and that is used to process data collected by a microphone.

In some implementations, the detection module is further configured to detect whether an unmute operation is received.

Correspondingly, the response module is further configured to: if the unmute operation is detected, disable the low power consumption mode of the wireless headset in response to the unmute operation.

According to a third aspect, an embodiment of this application provides a wireless headset, including a memory, a processor, and a computer program that is stored in the memory and that can run on the processor. When the processor executes the computer program, the method according to the first aspect is implemented.

According to a fourth aspect, an embodiment of this application provides a computer-readable storage medium. The computer-readable storage medium stores a computer program, and when the computer program is executed by a processor, the method according to the first aspect is implemented.

According to a fifth aspect, an embodiment of this application provides a computer program product. When the computer program product runs on a terminal device, the terminal device is enabled to perform the method according to the first aspect.

According to a sixth aspect, an embodiment of this application provides a chip system. The chip system includes a memory and a processor, and the processor executes a computer program stored in the memory, to implement the method according to the first aspect.

According to a seventh aspect, an embodiment of this application provides a chip system. The chip system includes a processor, the processor is coupled to the computer-readable storage medium according to the fourth aspect, and the processor executes a computer program stored in the computer-readable storage medium, to implement the method according to the first aspect.

It may be understood that for beneficial effects of the second aspect to the seventh aspect, refer to related descriptions in the first aspect, and details are not described herein again.

### BRIEF DESCRIPTION OF DRAWINGS

FIG. 1 is a schematic diagram of an application scenario of a low power consumption method for a wireless headset according to an embodiment of this application;
FIG. 2 is a schematic diagram of a structure of a wireless headset according to an embodiment of this application;
FIG. 3 is a schematic flowchart of a low power consumption method for a wireless headset according to an embodiment of this application;
FIG. 4 is a schematic diagram of an application scenario of a low power consumption method for a wireless headset according to another embodiment of this application;
FIG. 5 is a schematic diagram of an application scenario of a low power consumption method for a wireless headset according to another embodiment of this application;
FIG. 6 is a schematic flowchart of a low power consumption method for a wireless headset according to another embodiment of this application;
FIG. 7 is a schematic flowchart of a low power consumption method for a wireless headset according to another embodiment of this application;
FIG. 8 is a schematic diagram of a structure of a low power consumption apparatus for a wireless headset according to another embodiment of this application;
FIG. 9 is a schematic diagram of a structure of a low power consumption apparatus for a wireless headset according to another embodiment of this application; and
FIG. 10 is a schematic diagram of a structure of a wireless headset according to another embodiment of this application.

### DESCRIPTION OF EMBODIMENTS

In the following description, for illustration instead of limitation, specific details such as a particular system structure and a technology are provided to make a thorough understanding of embodiments of this application. However, a person skilled in the art should know that this application may be implemented in other implementations without these specific details. In other cases, detailed descriptions of well-known systems, apparatuses, circuits, and methods are omitted, so that this application is described without being obscured by unnecessary details.

It should be understood that when used in the specification and the appended claims in this application, the term "include" or "comprise" indicates the presence of described features, entireties, steps, operations, elements, and/or components, but does not rule out the presence or addition of one or more other features, entireties, steps, operations, elements, components, and/or combinations thereof.

It should be further understood that the term "and/or" used in the specification and the appended claims in this application means any combination of one or more of the associated listed items and all possible combinations, and includes these combinations.

As used in the specification and the appended claims in this application, the term "if" may be interpreted as "when ...", "once", "in response to determining", or "in response to detecting" based on the context.

In addition, in the descriptions of the specification and the appended claims in this application, the terms "first", "second", "third", and the like are merely used to distinguish between the descriptions, and cannot be construed as indicating or implying relative importance.

Reference to "an embodiment", "some embodiments", or the like described in the specification of this application means that one or more embodiments of this application include specific features, structures, or characteristics described with reference to the embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner.

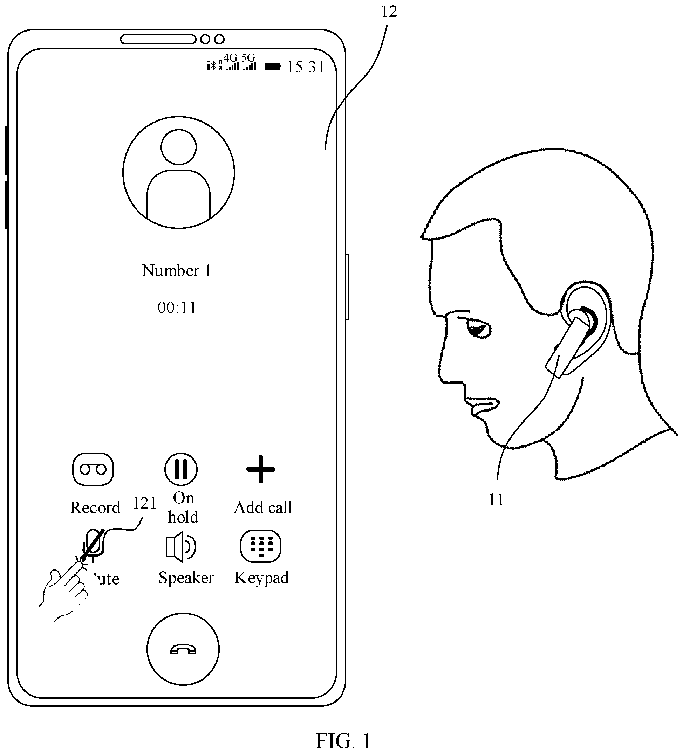

FIG. 1 shows a scenario of performing a call by using a wireless headset. The scenario includes a wireless headset 11 and a terminal device 12. The wireless headset 11 may usually be a Bluetooth headset such as a head-mounted Bluetooth headset, a neckband Bluetooth headset, an in-ear Bluetooth headset, or an ear-hook Bluetooth headset, or may be a TWS headset.

The terminal device is a device, for example, a smartphone, a tablet computer, a notebook computer, or a desktop computer with a wireless module, that supports a connection to and a call with the wireless headset. This is not limited herein.

In the scenario shown in FIG. 1, the terminal device 12 is communicatively connected to another calling device to perform a call. The wireless headset 11 is communicatively connected to the terminal device 12 through Bluetooth, and the wireless headset 11 receives audio information sent by a user, and processes the audio information. Then the wireless headset 11 sends processed audio information to the terminal device by using a Bluetooth protocol such as the Bluetooth hands-free profile (Hands-free Profile, HFP), the Bluetooth headset profile (Headset Profile, HSP), or the advanced audio distribution profile (Advanced Audio Distribution Profile, A2DP). The terminal device sends, by using a cellular network, the audio information to the calling device communicatively connected to the terminal device, and receives audio information sent by the calling device communicatively connected to the terminal device. The cellular network includes but is not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), time-division WCDMA (Time-Division WCDMA, TD-WCDMA), time-division LTE (Time-Division LTE, TD-LTE), 5th generation new radio (the 5th generation New Radio, 5G NR), and the like.

It should be noted that a mute operation may include an operation of muting a microphone, an operation of muting an application, or an operation of muting the entire terminal device. After being muted, the terminal device no longer sends audio data to the calling device communicatively connected to the terminal device.

Performing a call by using the wireless headset may be making a call by using the wireless headset, or may be performing a voice call in an application by using the wireless headset, or may be a voice call part when a video call is performed by using the terminal device. A type of the call is not limited herein.

For example, if the mute operation is an operation of muting the microphone, when receiving a tap operation performed on a microphone mute key 121, the terminal device 12 stops sending audio data to the calling device communicatively connected to the terminal device 12.

In a current wireless headset, when a terminal device is muted, no corresponding low power consumption measure is taken, and audio data of a user is still collected, processed, and uploaded. However, in this case, it is actually unnecessary to collect audio data. Continuously uploading audio data when the terminal device is muted causes the wireless headset to still collect audio data when there is unnecessary to collect audio data, wasting power and reducing a service life.

Therefore, this application provides a low power consumption method for a wireless headset, to reduce power consumption of the wireless headset and prolong a service life.

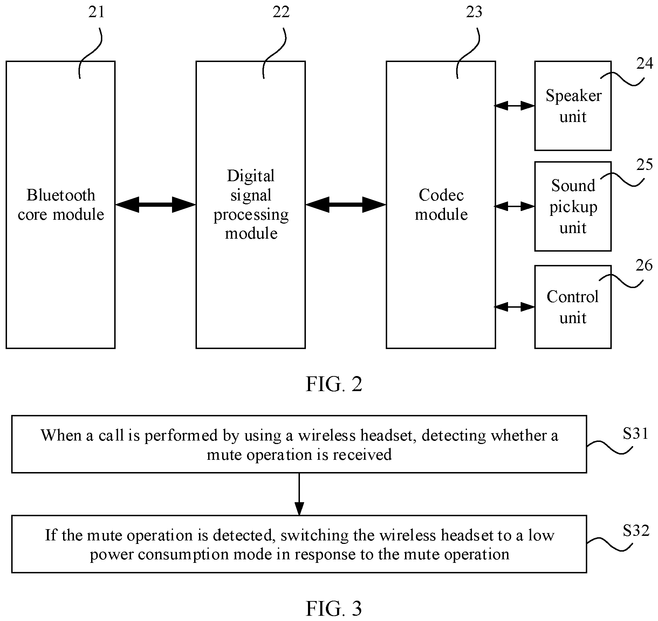

FIG. 2 is a schematic diagram of a structure of a wireless headset that may be applied to the low power consumption method for the wireless headset provided in this application.

As shown in FIG. 2, the wireless headset includes a Bluetooth core (Bluetooth core, BT core) module 21, a digital signal processing module (Digital Signal Process, DSP) 22, a codec (Codec) module 23, a speaker unit (Speaker) 24, a sound pickup unit (Mic) 25, and a control unit 26.

In some implementations, the BT core can implement Bluetooth functions, for example, performing Bluetooth pairing, performing a Bluetooth connection, and sending and receiving messages through Bluetooth. For example, the BT core may establish a communications link with a terminal device by using a protocol such as the mobile broadband (Mobile Broadband, MBB), the Bluetooth low energy (Bluetooth Low Energy, BLE), the serial port profile (Serial Port Profile, SPP), or the synchronous connection oriented link (Synchronous Connection Oriented link, SCO), and downlink data (for example, data downloaded from the terminal device to the wireless headset for processing), uplink data (data uploaded to the terminal device and sent to a calling device), and receive/transmit control data (for example, status related information) through the communications link.

When uplinking data and downlinking data, the DPS module may process the data by using related algorithms. For example, related algorithms for uplinking data include multi-microphone (Mic) data preprocessing, an uplink noise reduction algorithm, data conversion resampling, and audio encoding, and related algorithms for downlinking data include an ear to ear synchronization algorithm, audio decoding, data conversion resampling, downlink noise reduction, gain (Gain) value adjustment, calibration value application, and an audio mixing algorithm.

The codec module is configured to collect audio data by using the sound pickup unit. The sound pickup unit includes a plurality of mics such as a feed forward microphone (Feed Forward Mic, FF Mic), a feed back microphone (Feed Back Mic, FB Mic), a main microphone (Main Mic), and an audio input microphone (Auxiliary Mic, Aux Mic). After collecting the audio data, the codec module may further convert the collected analog audio data into digital audio data by using an analog-to-digital converter (ADC), and transmit the digital audio data to the DPS module for processing.

The codec module may further convert digital audio data sent by the DPS into analog audio data by using a digital-to-analog converter (DAC), and send the analog audio data to the speaker unit (Speaker) for playing the audio data.

Finally, the codec module may be further configured to manage power-on and power-off of a plurality of Mics, in other words, the codec module may turn off any microphone in the speaker unit.

The control unit may receive an operation of a user. For example, the control unit may be controlled through touch, and/or the control unit may be controlled by using a key. For example, when the control unit is controlled through touch, if a preset touch operation such as a double-tap operation, a tap operation, or a slide operation is received, the control unit may control the wireless headset to perform a corresponding action; or when the control unit is controlled by using a key, if a pressing operation performed on a preset key is received, the control unit may control the wireless headset to perform a corresponding action.

FIG. 3 is a schematic flowchart of a low power consumption method for a wireless headset according to this application. As an example instead of a limitation, the method may be applied to the foregoing wireless headset, and the wireless headset is communicatively connected to a terminal device.

S31: When a call is performed by using the wireless headset, detect whether a mute operation is received.

In some implementations, muting may be required during a call. In this case, a user often performs a mute operation on the wireless headset or the terminal device. For example, as shown in FIG. 1, the mute operation may be that the terminal device receives a tap operation performed on a microphone mute key 121, a tap operation performed on a mute key, or a preset gesture performed on a touchscreen.

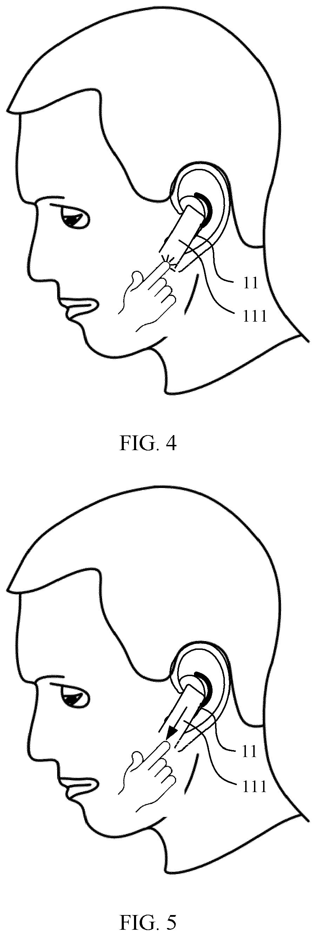

In some implementations, as shown in FIG. 4 and FIG. 5, the mute operation may be alternatively a double-tap operation, a tap operation, or a slide operation received in a touch area 111 on the wireless headset 11. Alternatively, if a physical key is disposed on the wireless headset 11, the mute operation may be that the wireless headset 11 receives a pressing operation performed on the physical key, or the like. This is not limited herein. Alternatively, if a sensor is disposed on the wireless headset 11, the mute operation may be that the sensor detects a corresponding sensing signal, for example, a light sensor detects that light is blocked, or a proximity light sensor detects that the wireless headset gets away from a human ear.

S32: If the mute operation is detected, switch the wireless headset to a low power consumption mode in response to the mute operation.

In some implementations, if the mute operation is detected, it indicates that the user temporarily does not use a microphone. In this case, the wireless headset may be switched to the low power consumption mode to reduce power consumption of the wireless headset.

When switching to the low power consumption mode is performed, at least one of the following low power consumption operations is performed: reducing an audio collection frequency of at least one microphone in the wireless headset, turning off at least one microphone in the wireless headset, and disabling at least one uplink data processing algorithm in the wireless headset.

For example, when a microphone collects audio, a collection frequency is usually 44100 Hz or 48000 Hz. Sometimes, to collect audio data with higher audio quality, the collection frequency may be 96000 Hz, 192000 Hz, or the like. There are a plurality of microphones in the wireless headset, for example, an FF mic and an FB mic that are configured to collect noise reduction audio data and a main mic configured to collect audio data sent by the user. When the low power consumption mode is entered, a collection frequency of at least one of the microphones may be reduced to 44100 Hz or even lower, for example, 22050 Hz or 11025 Hz. This is not limited herein.

Alternatively, a microphone that does not need to be used may be directly turned off. For example, after the mute operation is detected, the wireless headset does not need to collect audio sent by the user, and the main mic may be powered off to reduce power consumption; or even all the microphones may be powered off to more thoroughly reduce power consumption.

In another example, the DSP still processes uplink audio data by using an algorithm, regardless of whether the microphone is underclocked or turned off. In this case, because uplink data is useless, at least one of uplink processing algorithms may be disabled, for example, algorithms such as multi-microphone (Mic) data preprocessing and an uplink noise reduction algorithm may be disabled, and optimization processing on the uplink data is suspended, to reduce power consumption.

In this embodiment, when a call is performed by using the wireless headset, if the mute operation is detected, low power consumption processing is performed on the wireless headset in response to the mute operation. The low power consumption processing includes at least one of the following operations: reducing an audio collection frequency of at least one microphone in the wireless headset, turning off at least one microphone in the wireless headset, and disabling at least one uplink data processing algorithm in the wireless headset. Detection is performed on the mute operation during a call. If the mute operation is detected, a low power consumption policy is executed to reduce power consumption of the wireless headset during the call, so that a service life of the wireless headset is prolonged.

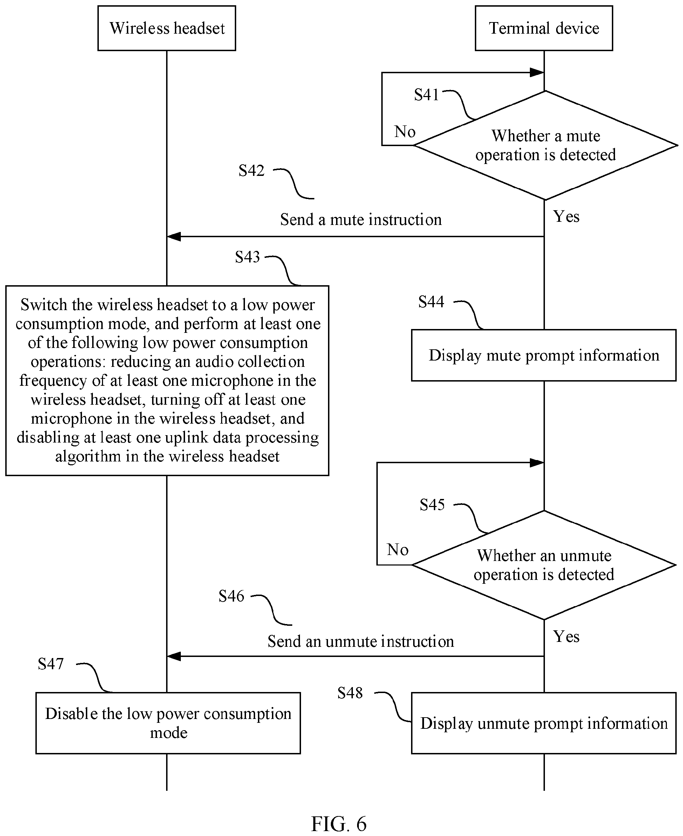

FIG. 6 is a possible schematic flowchart of a low power consumption method for a wireless headset.

As shown in FIG. 6, the method includes the following steps.

S41: Determine whether a mute operation is detected by a terminal device; and if the mute operation is detected, perform S42; otherwise, continue to perform detection.

In some implementations, as shown in FIG. 1, the mute operation received by the terminal device may be the detected tap operation performed on the microphone mute key 121. Alternatively, the mute operation is a pressing operation performed on a virtual key area or a physical key area preset on a device. For example, it is detected that a physical key used for muting is turned or tapped, or it is detected that a volume down key is double-tapped, or it is detected that a volume up key and a volume down key are simultaneously pressed. The volume up key and the volume down key may be physical keys, or may be virtual keys. When the key is a physical key, an electrical signal sent after the physical key is pressed may be detected to determine that the mute operation is received. When the key is a virtual key, a tap operation or a pressing operation performed on a display area of the virtual key may be detected to determine that the mute operation is received. Alternatively, the mute operation may be a preset gesture. For example, it is detected that a slide operation on a screen generates a q-shaped track. This is not limited herein.

S42: The terminal device sends a mute instruction to the wireless headset to perform S43 and S44.

In some implementations, the mute instruction may be state information indicating the terminal device to switch to a mute mode. The state information may be sent by using one of the following links: BLE, SPP, SCO, and A2DP links, or may be sent by using another link, for example, an MBB link. A link for sending the state information is not limited in this application.

S43: Switch the wireless headset to a low power consumption mode, and perform at least one of the following low power consumption operations: reducing an audio collection frequency of at least one microphone in the wireless headset, turning off at least one microphone in the wireless headset, and disabling at least one uplink data processing algorithm in the wireless headset.

In some implementations, as shown in S32, after the wireless headset switches to the low power consumption mode, power consumption of the microphone may be first reduced. For example, if the wireless headset is a TWS headset, the wireless headset includes two headsets, one of the headsets is a main headset, the other one is an auxiliary headset, the main headset is a headset directly connected to the terminal device, and the auxiliary headset is a headset connected to the main headset. A microphone of the main headset is configured to collect audio data. In this case, power consumption of the microphone of the main headset may be reduced. Generally, a main mic is configured to collect audio data of a user, and other microphones (auxiliary mics) are configured to provide data input for algorithms (3A algorithms) such as acoustic echo canceling (Acoustic Echo Cancelling, AEC), automatic gain control (Automatic Gain Control, AGC), and active noise control (Active Noise Control, ANC) algorithms. Therefore, the main mic may be powered off to reduce collection frequencies of the remaining auxiliary mics. Alternatively, the main mic and the mics are simultaneously powered off to more thoroughly reduce power consumption of the main headset. A mic to be powered off and a mic to be underclocked are not limited in this application.

Reducing power consumption of the main headset can reduce a speed of increasing a power difference between the main headset and the auxiliary headset and prolong a service life of the main headset. When only a single headset is used, a service life of the single headset can also be prolonged.

In other implementations, after power consumption of the microphone is reduced, an uplink data related algorithm such as a 3A uplink noise reduction algorithm, an audio resampling algorithm, or an audio mixing algorithm may be further disabled to further reduce power consumption of the wireless headset.

In addition, because a plurality of uplink data algorithms are disabled, a data processing capability requirement of a DSP is also reduced. Therefore, after the uplink data related algorithm is disabled, a dominant frequency of the DSP and power consumption of the DSP may be further reduced, so that power consumption of the wireless headset is further reduced.

Correspondingly, after the mic is powered off, the mic no longer collects audio data, and a codec may disable a path for processing the mic, so that power consumption of the wireless headset is more effectively reduced.

S44. The terminal device displays mute prompt information to perform S45.

In some implementations, if the mute operation is muting a microphone, the terminal device may change a color, a shape, or the like of the microphone mute key 121 shown in FIG. 1. Alternatively, the terminal device may display a mute identifier and text in a notification bar, to notify the user that the terminal device is currently muted. A mute prompt manner is not limited in this application.

S45: Determine whether an unmute operation is detected by the terminal device; and if the unmute operation is detected, perform S46; otherwise, continue to perform detection.

In some implementations, when the terminal device has been set to "mute", if the mute operation shown in S41 is detected, it may be determined that the unmute operation is detected. In other words, when the terminal device has been set to "mute", the mute operation may be used as the unmute operation.

S46: The terminal device sends an unmute instruction to the wireless headset to perform S47 and S48.

Sending the unmute instruction to the wireless headset by the terminal device is similar to that in S42, and details are not described herein again.

S47: The wireless headset disables the low power consumption mode.

In some implementations, when the wireless headset disables the low power consumption mode, an operation opposite to that in S43 may be performed. For example, if a mic is turned off, the mic that is turned off may be turned on. If a 3A uplink algorithm of the main headset is disabled, the 3A uplink algorithm of the main headset may be restored. It should be noted that when the mic is turned on and the uplink algorithm is enabled, a pop sound (Pop sound) may be generated by transient impact caused when audio data is processed by using various algorithms after an audio component is powered on and the power-on is stabilized. Therefore, when the low power consumption mode of the headset is disabled, a fade-in/fade-out equalizer (EQ) may be used to prevent the pop sound from being generated.

S48: The terminal device displays unmute prompt information.

For displaying the unmute prompt information, refer to S44. Details are not described herein again.

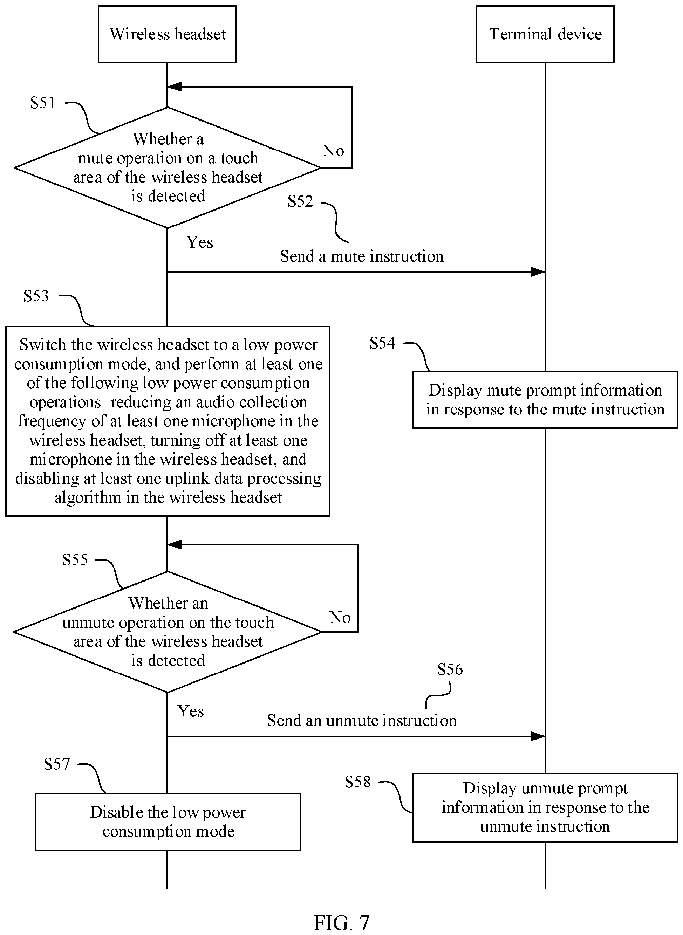

FIG. 7 is a possible schematic flowchart of another low power consumption method for a wireless headset.

As shown in FIG. 7, the method includes the following steps.

S51: Determine whether a mute operation is detected by the wireless headset; and if the mute operation is detected, perform S52; otherwise, continue to perform detection.

In some implementations, as shown in FIG. 4 and FIG. 5, detecting the mute operation on the wireless headset includes but is not limited to detecting a preset action performed on a touch area 111. The preset action may include double-tapping, sliding, tapping, pressing, or the like. Alternatively, if there is a physical key on the wireless headset, detecting the mute operation on the wireless headset may be detecting an electrical signal generated by a tap operation performed on the physical key. Alternatively, if a sensor is further disposed on the wireless headset, when the sensor detects a corresponding operation, it may be determined that the mute operation is detected. If a light sensor exists on the wireless headset, when the light sensor detects that light is blocked, it may be determined that the mute operation is detected. If a proximity light sensor exists on the wireless headset, when the proximity light sensor detects that the wireless headset gets away from a human ear, it may be determined that the mute operation is detected.

S52: The wireless headset sends a mute instruction to the wireless headset of a terminal device to perform S53 and S54.

Sending the mute instruction to the wireless headset of the terminal device by the wireless headset is similar to that in S42, and details are not described herein again.

S53: Switch the wireless headset to a low power consumption mode, and perform at least one of the following low power consumption operations: reducing an audio collection frequency of at least one microphone in the wireless headset, turning off at least one microphone in the wireless headset, and disabling at least one uplink data processing algorithm in the wireless headset to perform S55.

Switching the wireless headset to the low power consumption mode is similar to that in S43, and details are not described herein again.

S54: The terminal device displays mute prompt information in response to the mute instruction.

In some implementations, the mute instruction received by the terminal device includes an instruction that instructs to switch the terminal device to a mute mode. After receiving the instruction, the terminal device switches to the mute mode according to the instruction, and displays the mute prompt information in the manner shown in S44.

S55: Determine whether an unmute operation is detected by the wireless headset; and if the unmute operation is detected, perform S56; otherwise, continue to perform detection.

In some implementations, as shown in S45, when the wireless headset has been set to "mute", if the mute operation shown in S51 is detected, it may be determined that the unmute operation is detected. In other words, when the wireless headset has been set to "mute", the mute operation may be used as the unmute operation.

S56: The wireless headset sends an unmute instruction to the terminal device to perform S57 and S58.

Sending the unmute instruction to the wireless headset by the terminal device is similar to that in S52, and details are not described herein again.

S57: The wireless headset disables the low power consumption mode.

In some implementations, as shown in S47, when the wireless headset disables the low power consumption mode, an operation opposite to that in S53 may be performed. For example, if a mic is turned off, the mic that is turned off may be turned on. If a 3A uplink algorithm of a main headset is disabled, the 3A uplink algorithm of the main headset may be restored. It should be noted that when the mic is turned on and the uplink algorithm is enabled, a pop sound (Pop sound) may be generated by transient impact caused when audio data is processed by using various algorithms after an audio component is powered on and the power-on is stabilized. Therefore, when the low power consumption mode of the headset is disabled, a fade-in/fade-out equalizer (EQ) may be used to prevent the pop sound from being generated.

S58: The terminal device displays unmute prompt information in response to the unmute instruction.

For displaying the unmute prompt information, refer to S54. Details are not described herein again.

It should be understood that sequence numbers of the steps do not mean execution sequences in the foregoing embodiments. The execution sequences of the processes should be determined based on functions and internal logic of the processes, and should not be construed as any limitation on the implementation processes of embodiments of this application.

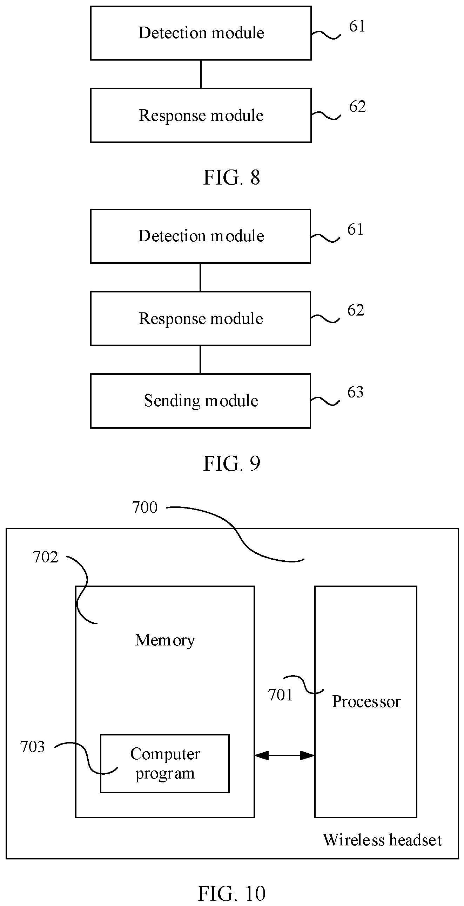

Corresponding to the low power consumption method for the wireless headset in the foregoing embodiments, FIG. 8 is a block diagram of a structure of a low power consumption apparatus for a wireless headset according to an embodiment of this application. For ease of description, only a part related to embodiments of this application is shown.

As shown in FIG. 8, the wireless headset is communicatively connected to a terminal device, and the apparatus includes:
a detection module 61, configured to: when a call is performed by using the wireless headset, detect whether a mute operation is received; and
a response module 62, configured to: if the mute operation is detected, in response to the mute operation, switch the wireless headset to a low power consumption mode and perform at least one of the following low power consumption operations: reducing an audio collection frequency of at least one microphone in the wireless headset, turning off at least one microphone in the wireless headset, and disabling at least one uplink data processing algorithm in the wireless headset.

In some implementations, the wireless headset includes a touch area.

The detection module 61 is specifically configured to detect the mute operation performed by a user on the touch area.

In some implementations, as shown in FIG. 9, the apparatus further includes a sending module 63, configured to send a mute instruction to the terminal device based on the mute operation.

In some implementations, the detection module 61 is specifically configured to detect that a mute instruction sent by the terminal device based on the mute operation on the terminal device is received.

In some implementations, the response module 62 is further configured to reduce a frequency of a digital signal processing module in the wireless headset.

In some implementations, the response module 62 is further configured to disable a path that is in an audio codec of the wireless headset and that is used to process data collected by a microphone.

In some implementations, the detection module 61 is further configured to detect whether an unmute operation is received.

Correspondingly, the response module 62 is further configured to: if the unmute operation is detected, disable the low power consumption mode of the wireless headset in response to the unmute operation.

It should be noted that content such as information exchange between the foregoing modules and an execution process is based on a same concept as that in the method embodiments of this application. For details of specific functions and technical effects, refer to the method embodiments. Details are not described herein again.

It may be clearly understood by a person skilled in the art that, for the purpose of convenient and brief description, division into the foregoing functional units or modules is merely used as an example for illustration. In actual application, the foregoing functions can be allocated to different functional units or modules for implementation based on a requirement, that is, an inner structure of the apparatus is divided into different functional units or modules to implement all or some of the functions described above. Functional units and modules in the embodiments may be integrated into one processing unit, or each unit may exist alone physically, or two or more units may be integrated into one unit. The foregoing integrated unit may be implemented in a form of hardware or may be implemented in a form of a software functional unit. In addition, specific names of the functional units and modules are used merely for ease of distinguishing, and are not intended to limit the protection scope of this application. For a detailed working process of the unit and the module in the foregoing system, refer to a corresponding process in the foregoing method embodiments. Details are not described herein again.

An embodiment of this application further provides a wireless headset, including a memory, a processor, and a computer program that is stored in the memory and that can run on the processor. When the processor executes the computer program, the foregoing low power consumption method for the wireless headset is implemented.

FIG. 10 is a schematic diagram of a structure of a wireless headset according to an embodiment of this application. As shown in FIG. 10, a wireless headset 700 in this embodiment includes at least one processor 701 (only one processor is shown in FIG. 10), a memory 702, and a computer program 703 that is stored in the memory 702 and that can run on the at least one processor 701. When the processor 701 executes the computer program 703, the steps in any one of the foregoing embodiments of the low power consumption method for the wireless headset are implemented.

The wireless headset 700 may be a head-mounted Bluetooth headset, a neckband Bluetooth headset, in-ear Bluetooth headset, an ear-hook Bluetooth headset, or a TWS headset. The wireless headset may include but is not limited to the processor 701 and the memory 702. A person skilled in the art may understand that FIG. 10 is merely an example of the wireless headset 700, and constitutes no limitation on the wireless headset 700. The wireless headset 700 may include more or fewer components than those shown in the figure, or may combine some components, or may include different components, for example, may further include a speaker unit and a sound pickup unit.

The processor 701 may be a central processing unit (Central Processing Unit, CPU). The processor 701 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or transistor logic device, discrete hardware component, or the like. The general-purpose processor may be a microprocessor, or the processor may be any conventional processor or the like.

In some embodiments, the memory 702 may be an internal storage unit of the wireless headset 700, for example, a hard disk or an internal memory of the wireless headset 700. In other embodiments, the memory 702 may be alternatively an external storage device of the wireless headset 700, for example, a plug-connected hard disk, a smart media card (Smart Media Card, SMC), a secure digital (Secure Digital, SD) card, or a flash card (Flash Card) configured on the wireless headset 700. Further, the memory 702 may alternatively include both an internal storage unit of the wireless headset 700 and an external storage device. The memory 702 is configured to store an operating system, an application program, a bootloader (BootLoader), data, and another program such as program code of the computer program. The memory 702 may be further configured to temporarily store data that has been output or that is to be output.

An embodiment of this application further provides a computer-readable storage medium. The computer-readable storage medium stores a computer program. When the computer program is executed by a processor, the steps in the foregoing method embodiments may be implemented.

An embodiment of this application provides a computer program product. When the computer program product runs on a mobile terminal, the mobile terminal may be enabled to implement the steps in the foregoing method embodiments.

When the integrated unit is implemented in the form of a software functional unit and sold or used as an independent product, the integrated unit may be stored in a computer-readable storage medium. Based on such an understanding, all or some of the procedures in the methods in the foregoing embodiments implemented in this application may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, a form of an executable file, some intermediate forms, or the like. The computer-readable medium may include at least any entity or apparatus capable of carrying computer program code to a wireless headset, a recording medium, a computer memory, a read-only memory ( Read-Only Memory, ROM), a random access memory (Random Access Memory , RAM), an electrical carrier signal, a telecommunications signal, and a software distribution medium, for example, a USB flash drive, a removable hard disk, a magnetic disk, or an optical disc. In some jurisdictions, according to legislation and patent practice, the computer-readable medium cannot be an electrical carrier signal or a telecommunications signal.

An embodiment of this application provides a chip system. The chip system includes a memory and a processor, and the processor executes a computer program stored in the memory, to implement the steps in the foregoing method embodiments.

An embodiment of this application provides a chip system. The chip system includes a processor, the processor is coupled to a computer-readable storage medium, and the processor executes a computer program stored in the computer-readable storage medium, to implement the steps in the foregoing method embodiments.

In the foregoing embodiments, the description of each embodiment has respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the embodiments provided in this application, it should be understood that the disclosed method, apparatus, and wireless headset may be implemented in other manners. For example, the described apparatus embodiments are merely examples. For example, division into the modules or units is merely logical function division, and may be other division during actual implementation. For example, a plurality of units or components may be combined or may be integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A low power consumption method for a wireless headset, wherein the wireless headset is communicatively connected to a terminal device, and the method comprises:
when a call is performed by using the wireless headset, detecting whether a mute operation is received; and
if the mute operation is detected, in response to the mute operation, switching the wireless headset to a low power consumption mode and performing at least one of the following low power consumption operations: reducing an audio collection frequency of at least one microphone in the wireless headset, turning off at least one microphone in the wireless headset, and disabling at least one uplink data processing algorithm in the wireless headset.

2. The method according to claim 1, wherein the wireless headset comprises a touch area; and
that the mute operation is detected comprises:
the mute operation on the touch area is detected.

3. The method according to claim 2, wherein after the mute operation performed by a user on the touch area is detected, the method further comprises:
sending a mute instruction to the terminal device based on the mute operation.

4. The method according to claim 1, wherein that the mute operation is detected comprises:
that a mute instruction sent by the terminal device based on the mute operation on the terminal device is received is detected.

5. The method according to claim 1, wherein after the disabling at least one uplink data processing algorithm in the wireless headset is performed on the wireless headset, the method further comprises:
reducing a frequency of a digital signal processing module in the wireless headset.

6. The method according to claim 5, wherein after the reducing a frequency of a digital signal processing module in the wireless headset, the method further comprises:
disabling a path that is in an audio codec of the wireless headset and that is used to process data collected by a microphone.

7. The method according to any one of claims 1 to 6, wherein after the switching the wireless headset to a low power consumption mode, the method further comprises:
detecting whether an unmute operation is received, and if the unmute operation is detected, disabling the low power consumption mode of the wireless headset in response to the unmute operation.

8. A low power consumption apparatus for a wireless headset, wherein the wireless headset is communicatively connected to a terminal device, and the apparatus comprises:
a detection module, configured to: when a call is performed by using the wireless headset, detect whether a mute operation is received; and
a response module, configured to: if the mute operation is detected, in response to the mute operation, switch the wireless headset to a low power consumption mode and perform at least one of the following low power consumption operations: reducing an audio collection frequency of at least one microphone in the wireless headset, turning off at least one microphone in the wireless headset, and disabling at least one uplink data processing algorithm in the wireless headset.

9. A wireless headset, comprising a memory, a processor, and a computer program that is stored in the memory and that can be run on the processor, wherein when the processor executes the computer program, the method according to any one of claims 1 to 7 is implemented.

10. A computer-readable storage medium, wherein the computer-readable storage medium stores a computer program, and when the computer program is executed by a processor, the method according to any one of claims 1 to 7 is implemented.
